# EUROPEAN PATENT APPLICATION

(11) **EP 4 467 715 A1**
(43) Date of publication of application: **27.11.2024**
(21) Application number: 24177246.6
(22) Date of filing: 22.05.2024
(51) Int. Cl.: D21H 17/02, C09D 7/63, D21H 19/10, D21H 19/44, D21H 19/82, D21H 19/84, D21H 21/16, D21J 1/08, D21J 5/00

(54) **A FIBROUS PRODUCT AND A METHOD OF COATING A FIBROUS SUBSTRATE**

(30) Priority: 26.05.2023 FI 20235585
(71) Applicant: Metsä Board Oyj, 02020 Metsä (FI)
(72) Inventor: Talja, Riku, 02020 Metsä (FI); Hirvonen, Kirsi, 02020 Metsä (FI); Saari, Terhi, 02020 Metsä (FI)
(74) Representative: Laine IP Oy

(57) **Abstract**

According to an example aspect of the present invention, there is provided a fibrous product comprising a barrier-coating layer, wherein the barrier-coating layer comprises a wood-bark derived component, and the fiber content, particularly cellulosic fiber content, of the barrier-coating layer is less than 40% of the dry weight of the layer.

## Description

### FIELD

The present invention relates to the field of coatings. More specifically, it relates to the field of coatings of fibrous products.

### BACKGROUND

Fibrous products are coated to provide additional functionalities to the products. Such functionalities may include for example providing colour, providing a smooth surface to the product or reducing ink absorbency. One class of coatings are barrier-coatings, which for example may provide resistance to grease, moisture or oxygen.

Traditionally water based barrier-coatings are formulated using a pigment and petrochemistry based binders. Such applications are not desirable due to environmental factors. Petrochemistry based binders may be replaced by natural polymers in some occasions. However, the natural polymers are typically sensitive for moisture limiting their use for example in food packaging applications. Therefore, new approaches for bio-based barrier coatings are still needed.

### SUMMARY OF THE INVENTION

The invention is defined by the features of the independent claims. Some specific embodiments are defined in the dependent claims.

According to a first aspect of the present invention, there is provided a fibrous product comprising a barrier-coating layer. The barrier-coating layer comprises a wood-bark derived component, and the fiber content, particularly cellulosic fiber content, of the barrier-coating layer is less than 40% of the dry weight of the layer.

Various embodiments of the first aspect may comprise at least one feature from the following bulleted list:
- Said wood-bark derived component is selected from suberin, betulin or combinations thereof.
- Said barrier-coating layer comprises the wood-bark derived component in an amount of at least 30%, such as at least 50%, of dry weight of the barrier-coating layer.
- Said barrier-coating layer comprises the wood-bark derived component in an amount of at least 5%, such as at least 10%, of dry weight of the barrier-coating layer.
- The fiber content of the barrier-coating layer is less than 30%, such as less than 20%, for example less than 10%, of the dry weight of the barrier-coating layer.
- Said fibrous product comprises a fibrous substrate, which is paper, paperboard such as folding boxboard, food service board, linerboard or corrugated boards, a wood-based board or a moulded pulp product, and said barrier coating layer lies on top of the fibrous substrate.
- The fibrous product comprises at least one further coating layer.
- The wherein water vapour transmission rate of the fibrous product is less than 500 g/m²/24 h at 38 °C and 90% relative humidity.
- The amount of the barrier-coating layer is below 10 g/m², such as below 8 g/m² or below 6 g/m².
- The barrier-coating layer further comprises at least one pigment such as talc, calcium carbonate, clay, bentonite, montmorillonite or chemically modified pigments, and/or at least one binder, such as cellulose and cellulose derivatives, starch and starch derivatives, hemicellulose and hemicellulose derivatives and/or synthetic binders such as styrene-acrylate, styrene-butadiene, acrylate copolymers, ethylacrylate, polyolefins, polyvinylacetate and polyvinylalcohol.
- The barrier-coating layer comprises more than 20%, such as more than 40% or more than 50%, for example more than 60%, of at least one pigment and/or at least one binder calculated form the dry weight of the layer.
- The barrier-coating layer comprises 50 - 60% of at least one pigment, 30 - 40% of at least one binder and 5 - 15% of the wood-bark derived component.
- The barrier-coating layer is discontinuous.
- The barrier-coating layer is breathable or porous.
- The thickness of the barrier-coating layer ranges from 1 to 20 µm, such as from 2 to 16 µm, preferably from 3 to 10 µm.
- The Cobb's value of the product is below 10 g/m² measure at 300 s.

According to a second aspect of the present invention, there is provided a method of coating a fibrous substrate. The method comprises the steps of:
- providing a barrier-coating composition comprising a wood-bark derived component, and
- applying the composition onto a surface of a fibrous substrate to obtain a barrier-coated fibrous substrate.
The fiber content of the barrier-coating composition is less than 40% of the dry weight of the composition.

Various embodiments of the second aspect may comprise at least one feature from the following bulleted list:
- The wood-bark derived component comprises suberin, betulin or combinations thereof.
- The fibrous substrate is paper, paperboard, such as folding boxboard, food service board, linerboard or corrugated boards, a wood-based board or a moulded pulp product.
- The barrier-coating composition comprising the wood-bark derived component is applied in the form of an emulsion, a dispersion, a solution, a liquid or a powder.
- The barrier-coating composition comprises at least 30%, such as at least 50%, of the wood-bark derived component calculated from the dry weight of the composition.
- The barrier-coating composition comprises at least 5%, such as at least 10%, of the wood-bark derived component calculated from the dry weight of the composition.
- The barrier-coating composition is applied onto the surface by spraying, rod coating, curtain coating, flexo printing, offset printing, surface sizing, foam coating or blade coating.
- The barrier-coating composition further comprises pigment such as talc, calcium carbonate, clay, bentonite, montmorillonite or chemically modified pigments, and/or binder, such as cellulose and cellulose derivatives, starch and starch derivatives, hemicellulose and hemicellulose derivatives and/or synthetic binders such as styrene-acrylic, styrene-butadiene, acrylate copolymers, ethyl acrylate, polyolefins, polyvinylacetate and polyvinylalcohol.
- The barrier-coating composition comprises more than 20%, such as more than 40% or more than 50%, for example more than 60%, of at least one pigment and/or at least one binder calculated form the dry weight of the composition.
- The barrier-coating composition comprises 50 - 60% of at least one pigment, 30 - 40% of at least one binder and 5 - 15% of the wood-bark derived component.
- The method further comprising applying at least one further coating layer on the fibrous substrate, either before or after applying the barrier-coating composition.
- The method comprises heating the obtained barrier-coated substrate to at least 50 °C, such as at least 80 °C, after the application step.

According to a third aspect of the present invention, there is provided a use of the fibrous product as or in packaging material.

### Advantages of the invention

An advantage of the present invention is that a fibrous product comprising a barrier-coating layer may be formed completely from renewable components.

A further advantage of the present invention is that a fibrous product comprising the barrier-coating layer may have increased resistance to moisture and/or water vapour transmission.

A further advantage of the present invention is that a fibrous product comprising the barrier-coating layer may have a breathable surface allowing gas transmission, particularly oxygen transmission, over the surface.

A further advantage of the present invention is that the increased resistance to moisture is achieved even with a thin barrier-coating layer.

A further advantage of the present invention is that the wood-bark derived component is required only in small amounts for achieving the desired barrier effect.

### EMBODIMENTS

In the present context, the term "fiber" refers to a material form characterized by a high ratio of length to diameter.

In the present context, the term "cellulosic fiber" refers to fibers derived from plant tissue. The fibers may be non-wood fibers or wood-fibers. Generally, cellulosic fibers have a very broad range of diameters and length based on fiber type and source of fiber. The term cellulosic fiber may refer to wood pulp fibers but also to cellulose nanofibers, such as microfibrillar cellulose (MFC) or nanofibrillar cellulose (NFC). Cellulosic fibers may further refer to modified or recycled cellulosic fibers. Cellulosic fibers may further refer to lignocellulosic fibers.

In the present context, the term "barrier-coating" refers to a coating composition which provides barrier effects. Such barrier effects may include for example oil resistance, grease resistance, moisture resistance, water vapour resistance, gas resistance, flavour resistance and/or oxygen resistance.

The present invention discloses a fibrous product comprising a barrier-coating layer. The barrier-coating layer comprises a wood-bark derived component. The wood-bark derived component may be selected from suberin, betulin or combinations thereof.

Suberin is a lipophilic macromolecule found in plant cell walls. It is a complex structure build from poly-functional long-chain fatty acids (suberin acids), glycerol and aromatic compounds such as hydroxycinnamic acid. Suberin acids include for example 18-hydroxyoctadec-9-enoic acid, 9,10-epoxy-18-hydroxyoctadecanoic acid, 20-hydroxyeicosanoic acid, 9,10,18-trihydroxyoctadecanoic acid and 22-hydroxydocosanoic acid. Typically, suberin is extracted from wood bark, for example from birch bark. Suberin can also be extracted for example from cork. The exact suberin composition varies. In some exemplary embodiments suberin fatty acid composition may comprise 1.5 - 10.7% of 18-hydroxyoctadec-9-enoic acid, 50.6 - 80.7% of 9,10-epoxy-18-hydroxyoctadecanoic acid, 0.2 - 2.9% of 20-hydroxyeicosanoic acid, 0.6 - 6.8% of 9,10,18-trihydroxyoctadecanoic acid and 12.0 - 26.2% of 22-hydroxydocosanoic acid based on peak areas of suberin emulsion in GC-MS analysis. In some embodiments, extracted suberin may comprise other wood-derived components, such as betulin, in small amounts in addition to suberin. Betulin is a triterpene having a pentacyclic ring structure. Betulin can be extracted from certain wood barks, such as birch bark. Betulin amount may range for example from 0 to 15 weight percentage, such as below 10% or below 5%, of the dry weight of the suberin extract. In some embodiments, the suberin is in the form of a dispersion. The suberin content of the dispersion may be for example 50%, 80%, 90% or 95% of the dry weight of the dispersion.

In some embodiments, the wood-bark derived component may be obtained, such as extracted, from bark of birch or cork oak.

In some examples the wood-bark derived component comprises less than 15 wt-% of betulin, such as less than 10 wt-% or less than 5 wt-% of betulin. It has been observed that in these embodiments a barrier effect, specifically an improved water vapour resistance, is obtained even without the presence of betulin in the barrier-coating layer.

Preferably, the fiber content, particularly cellulosic fiber content, of the barrier-coating layer may be less than 40% of the dry weight of the barrier-coating layer. In other embodiments, the fiber content of the barrier-coating layer may be less than 30%, such as less than 20% or less than 10%, for example less than 5%, of the dry weight of the barrier-coating layer. In some embodiments, the barrier-coating layer does not comprise any fibers, particularly any cellulosic fibers. Fibers can be added to barrier compositions for example to improve the strength of paper products, the structure of the barrier layer and/or to provide barrier properties. In the barrier-coating layers according to the present disclosure, the fiber content may be kept low without losing the barrier-properties of the layer.

The barrier-coating layer may comprise the wood-bark derived component in many different amounts. In some embodiments, the barrier-coating layer may comprise the wood-bark derived component in an amount of at least 30%, such as at least 50%, of dry weight of the barrier-coating layer. For example, the barrier-coating layer may comprise 60%, 70%, 80%, 90%, 95% or 100% of the wood-bark derived product calculated from the dry-weight of the barrier-coating layer. In some applications, an extract of the wood-bark derived component may be used without any additional chemicals. It has been surprisingly been found, that such extract forms a barrier-coating layer. In these examples, the extract is typically in the form of a dispersion or an emulsion.

In other embodiments, the barrier-coating layer comprises the wood-bark derived component in an amount of at least 1%, such as at least 2%, at least 5%, at least 10%, at least 15% or at least 20%, of the dry weight of the barrier-coating layer. In such examples, the barrier-coating layer may additionally comprise for example pigments and/or binders. In these cases, the wood-bark derived component is only required in small quantities for gaining the desired barrier effects.

In some embodiments, the barrier-coating composition comprising the wood-bark derived component may be in the form of a dispersion comprising 5 - 30%, such as 10 - 25%, for example 12 - 18%, of dry matter. The dispersion may preferably be an aqueous dispersion. In other embodiments, the barrier coating composition comprising the wood-bark derived component may be in the form of a powder.

The fibrous product may in some examples be paper, paperboard, such as folding boxboard, food service board, linerboard or corrugated boards, a wood-based board or a moulded pulp product. In some examples, the surface of the fibrous product is untreated and/or un-manipulated, such as uncoated, prior to application of the barrier-coating layer. In other examples, the surface of the fibrous product may be coated and/or embossed prior to the application of the barrier-coating layer. One or more additional coating layer(s) may be in some examples applied to the fibrous product before or after the application of the barrier-coating composition.

In some embodiments, the fibrous product may comprise at least one further coating layer. Such further coating layer may be for example a pre-coating, a further barrier coating, such as dispersion barrier coating, or a top-coating. For example, the further coating layer may comprises at least one pigment such as talc, calcium carbonate, clay, bentonite, montmorillonite or chemically modified pigments, and/or at least one binder, such as cellulose and cellulose derivatives, starch and starch derivatives, hemicellulose and hemicellulose derivatives and/or synthetic binders such as styrene-acrylate, styrene-butadiene, acrylate copolymers, ethyl acrylate, polyolefins, polyvinylacetate and polyvinylalcohol. In some examples the further coating may comprise 60% of pigment and 40% of binder, such as biobinder. In other examples, the fibrous product may comprise multiple further coating layers. For example, the fibrous product may comprise a pre-coating and a top-coating. In some embodiments, the pre-coating may be denser than the top-coating. The fibrous product may for example be coated prior to application of the barrier-coating layer.

In other preferred embodiments, the barrier-coating layer may comprise at least one pigment and/or at least one binder. For example, the barrier-coating layer may comprises at least one pigment such as talc, calcium carbonate, clay, bentonite, montmorillonite or chemically modified pigments, and/or at least one binder, such as cellulose and cellulose derivatives, starch and starch derivatives, hemicellulose and hemicellulose derivatives and/or synthetic binders such as styrene-acrylate, styrene-butadiene, acrylate copolymers, ethyl acrylate, polyolefins, polyvinylacetate and polyvinylalcohol. Preferably, the binder may be selected from cellulose and cellulose derivatives, starch and starch derivatives, hemicellulose and hemicellulose derivatives.

In some examples the barrier-coating layer may comprise more than 20%, such as more than 30%, more than 40%, more than 50%, more than 60%, for example more than 70%, more than 80%, more than 85%, more than 90% or more than 95% of at least one pigment and/or at least one binder calculated from the dry weight of the barrier-coating layer. In these examples, the wood-bark derived product may be mixed with a pigment slurry or binder fraction prior to application onto the fibrous product. The composition comprising the wood-bark derived component may be in the form of a dispersion, emulsion or powder. For example, the barrier-coating layer may comprise or consist of 50 - 60% of at least one pigment, 30 - 40% of at least one binder and 5 - 15% of the wood-bark derived component. A barrier-coating layer comprising pigment and/or binder may be applied in some embodiments on a fibrous product comprising one or multiple further coating layers. Further coating layers may in other examples be applied on top of the barrier-coating layer.

The finding of the present disclosure is that the wood-bark derived component provides a barrier effect. Particularly, the fibrous product according to the invention has an improved water vapour transmission rate (WVTR). In some embodiments, water vapour transmission rate of the fibrous product may be less than 500 g/m²/24 h at 38 °C and 90% relative humidity (RH). WVTR may for example be less than 450 g/m²/24 or less than 400 g/m²/24 at 38 °C and 90% relative humidity. Such WVTR may be achieved with a dispersion coating consisting of the wood-bark derived component. In some embodiments, the fibrous product with WVTR less than 500 g/m²/24 h at 38 °C and 90% relative humidity may comprise further coating layers in addition to the barrier-coating layer as explained above. For example, the wood-bark derived component may be suberin and the water vapour transmission rate of the fibrous product may be less than 500 g/m2/24h at 38 °C and 90% relative humidity.

The inventors of the present disclosure have found that only a relatively thin barrier-coating layer is required for the desired barrier effect. In some embodiments, the amount of the barrier-coating layer may be below 10 g/m², such as below 8 g/m² or below 6 g/m². In other embodiments, the amount of the barrier-coating layer may be in the range of 1 to 10 g/m², preferably in the range of 2 to 8 g/m². The amount of the barrier-coating layer may be for example below 5 g/m² or below 4 g/m². This is advantageous over typical barrier-coating layers that may be even 15 g/m². In some embodiments, the thickness of the barrier-coating layer ranges from 1 to 20 µm, such as from 2 to 16 µm, preferably from 3 to 10 µm. The thickness may be range for example from 4 to 18 µm or from 7 to 16 µm.

The inventors have surprisingly observed that the barrier-coating layer does not necessarily form a uniform, continuous layer. The barrier-coating layer may in some embodiments be discontinuous. In other words, the barrier-coating layer does not in some examples cover the fibrous surface completely but there are small pores or irregularities in the formed layer. Nonetheless, the water vapour transmission rate of a coated fibrous product is still reduced. Therefore, it is not necessary to add components that provide structure to the barrier-coating layer. Such components may include for example fibrous components. The discontinuous layer may provide additional advantages, such as oxygen transmission over the surface of the fibrous product while maintaining low water transmission rate. For example, the barrier-coating layer may be breathable or porous.

In some embodiments, the Cobb's value of the fibrous product may be below 10 g/m² measured at 300 s.

In another aspect of the invention, a method of coating a fibrous substrate is provided. In some examples, a barrier-coating composition comprising a wood-bark derived component is provided, and the barrier-coating composition is applied onto a surface of a fibrous substrate. In these examples, the fiber content of the barrier-coating composition may be less than 40% of the dry weight of the composition.

In some examples, the wood-bark derived component that is to be applied to the surface of the fibrous product comprises suberin, betulin or combinations thereof. For example, the wood-bark derived component may comprise or consist of suberin. In some examples the wood-bark derived component comprises less than 15 wt-% of betulin, such as less than 10 wt-% or less than 5 wt-% of betulin.

The fibrous substrate may be any fibrous substrate to which a barrier-coating composition may be applied to. Preferably, the fibrous substrate may be paper, paperboard, such folding boxboard, food service board, linerboard or corrugated boards, a wood-based board or a moulded pulp product. In some embodiments, the fibrous substrate is a packaging material.

In some embodiments, the barrier-coating composition comprising the wood-bark derived component may be in the form of an emulsion, a dispersion, a solution, a liquid or a powder. Preferably, the barrier-coating composition comprising the wood-bark derived product may be in the form of a dispersion, emulsion or a powder. In some embodiments, the barrier-coating composition may comprise at least 30%, such as at least 50%, or at least 60%, or at least 70% or at least 80% or at least 90% or 100%, of the wood-bark derived component calculated from the dry weight of the composition. In other embodiments, the barrier-coating composition may comprise at least 5%, such as at least 10%, or at least 15%, or at least 20%, of the wood-bark derived component calculated from the dry weight of the composition.

The barrier-coating composition may be applied onto the surface of the fibrous substrate by any technique suitable for such application. For example, the barrier-coating composition may be applied to the surface by spraying, rod coating, curtain coating, flexo printing, offset printing, surface sizing, foam coating or blade coating. In preferred embodiments, the barrier-coating composition is applied by spraying or rod coating.

The barrier-coating composition may in some embodiments further comprises pigment such as talc, calcium carbonate, clay, bentonite, montmorillonite or chemically modified pigments, and/or binder, such as cellulose and cellulose derivatives, starch and starch derivatives, hemicellulose and hemicellulose derivatives and/or synthetic binders such as styrene-acrylic, styrene-butadiene, acrylate copolymers, ethyl acrylate, polyolefins, polyvinylacetate and polyvinylalcohol. Preferably, the binder may be selected from cellulose and cellulose derivatives, starch and starch derivatives, hemicellulose and hemicellulose derivatives. In some embodiments, the barrier-coating composition may comprise more than 20%, such as more than 40% or more than 50%, for example more than 60% of at least one pigment and/or at least one binder calculated form the dry weight of the composition. For example, the barrier-coating composition may comprise 50 - 60% of at least one pigment, 30 - 40% of at least one binder and 5 - 15% of the wood-bark derived component.

In some embodiments, the fibrous substrate may be coated with at least one further coating layer. Such coating layer may be for example a pre-coating, a top-coating or a further barrier coating. The further coating layer may comprise for example at least one pigment and/or at least one binder. In some embodiments the ratio between the pigment and the binder in a top-coating layer is 60 : 40 respectively. The binder may be in some preferred embodiments be a bio-binder, such as starch. The pigment may be for example talc or calcium carbonate or a combination of these two. The fibrous substrate may in some embodiments comprise multiple coating layers prior application of the barrier-coating composition comprising the wood-bark derived component. In some embodiments, the fibrous substrate is coated prior to application of the barrier-coating composition. In other embodiments, one or several further coating layers are applied after application of the barrier-coating composition comprising the wood-bark derived component. For example, the barrier-coating composition may be coated on a pre-coated fibrous substrate and a top-coating is applied thereafter.

It has been further observed that the barrier-coating composition may form a continuous layer upon heating of the barrier-coating composition or the fibrous product or the fibrous substrate comprising the barrier-coating layer. It may be that the wood-derived product melts during the heating, resulting in a continuous layer. Thus in some embodiments the method comprises heating of the barrier-coated substrate. The temperature during heating is preferably at least 50 °C, such as at least 70 °C or at least 80 °C. Preferably, the temperature during heating is below 150 °C. In some embodiments, the barrier-coating composition or the fibrous product or fibrous substrate comprising the barrier-coating composition may be heated for example by using hot air or during calendering.

Yet another aspect of the invention is use of the disclosed fibrous product as packaging material or in packaging material. In some embodiments, the packaging material is used in applications where good moisture resistance is needed. Such applications may include for example materials for preparing, serving, storing or consuming food or cosmetics.

### Examples

### Example 1 - Spray coating

Two different paperboards were coated with suberin dispersion: folding boxboard with a compact precoating on the surface (FBB1) and folding boxboard with the same precoating and a top coating of barrier pigment/binder coating (FBB2).

Suberin dispersion was prepared from bark extract by methods known in the art. Solids content of the suberin dispersion was 7 - 15% of the total weight of the dispersion and dilutions were made in deionized water. Suberin content of the dispersion after dilution was 7% of the total weight of the dispersion. pH of the dispersion was 4.5 - 5.5 pH units.

Suberin dispersion was applied on the surfaces of FBB1 and FBB2 with spray nozzle 0.8 or 1.1 mm. Coating was dried with infrared drying (90 s), distance between drier and paperboard surface being 18.5 cm. Coating thickness of 4 - 8 µm was reached with the nozzles. Figure 1 shows a surface of a FBB1 coated with a 0.8 mm nozzle.

Scanning electron microscopy of the cross section of coated paperboard revealed that suberin dispersion did not cover entirely the surface of the paperboard substrate. Smoother surface was reached with suberin compared to a surface without the suberin coating. Bigger nozzle allowed to reach a higher surface coverage than the smaller nozzle. Suberin dispersion increased the total surface energy of the surfaces from 44 to 60 mN/m, having both polar and dispersive components, 26 mN/m and 34 mN/m respectively.

Suberin coating decreased water absorption (Cobb 300s and Cobb 1800s) regardless of uncontinuous coating layer (Table 1). In this experiment, the suberin application was conducted with the 0.8 mm nozzle. Grease resistance was tested for FBB1 and FBB1 with suberin coating with olive oil at 60 °C and was with a flat sample 7 - 24 h. The coating did not affect grease resistance of the material.

**Table 1.**

| **Sample** | **Cobb 300, BS, g/m²** | | **Cobb 1800, BS, g/m²** | |
|---|---|---|---|---|
| | average | standard deviation | average | standard deviation |
| FBB1 | 13 | 2 | 59 | 1 |
| FBB 1 + suberin | 5 | 1 | 28 | 4 |

Water vapour transmission rate (WVTR) was measured according to ISO 2528 and was remarkably improved (38 - 68%) with suberin dispersion (Table 2).

**Table 2.**

| **Sample** | **WVTR** | | **WVTR** | |
|---|---|---|---|---|
| | **23 °C, 50% RH (g/m²/24h)** | | **38 °C, 90% RH (g/m²/24h)** | |
| | average | standard deviation | average | standard deviation |
| FBB1 | 40 | 1 | 965 | 10 |
| FBB1 + suberin | 25 | 5 | 359 | 91 |
| FBB2 + suberin | 22 | 0 | 313 | 4 |

### Example 2 - Slot coating

The same paperboards as in example 1 were used in these experiments. The amount of the barrier dispersion coating was 12 gsm and the pH of the coating was pH 8.1.

Suberin dispersion was diluted to have solids content from 10 to 25% calculated from the total weight of the dispersion. The dilution was made in deionized water and the pH of the dispersion was 4.8 - 5.3 pH units.

Suberin dispersion was applied with slot coating (2 gsm, film applicator gap was 0) on the paperboard surfaces and coating was dried with infrared drying (50 s).

Suberin coating decreased water absorption (Cobb 300s). Cobb 300s was 14 gsm for FBB 1 and 1 gsm for FBB2. FBB2 coated with suberin has Cobb 300s at the same level as FBB2 (1 gsm). Grease resistance was measures as in example 1. Grease resistance was improved from 6 - 24 h for FBB1 to 77 - 96 h for FBB2. Grease resistance remained at the same level after suberin treatment on FBB2.

Water vapour transmission rate (WVTR) was measured with the method described in example 1. WVTR was improved for FBB2 when compared to FBB1. Suberin treatment further provided significant improvement on WVTR (Table 3).

**Table 3.**

| **Sample** | **WVTR** | | **WVTR** | |
|---|---|---|---|---|
| | **23 °C, 50% RH (g/m²/24h)** | | **38 °C, 90% RH (g/m²/24h)** | |
| | average | standard deviation | average | standard deviation |
| FBB1 | 51 | 0 | 600 | 21 |
| FBB2 | 32 | 3 | 560 | 9 |
| FBB 2 + Suberin | 29 | 0 | 380 | 1 |

### Example 3 - Suberin dispersion as a part of coating colour

Folding boxboard was precoated on the surface (FBB1). The following samples were prepared for coating FBB 1:
Sample 1: Pigment suspensions (pigment 1:talc and pigment 2:carbonate) was mixed and binder suspension was added by mixing. Pigment / binder ratio was 60/40, pH 8.8 and solids content 36% calculated from the total weight of the sample.
Sample 2: Pigment suspensions (pigment 1 and 2) was mixed and binder suspension was added by mixing. Suberin dispersion (solids content 10 - 15%, dilution made in deionized water) was added by mixing. Pigment/binder/suberin ratio was 57/38/5, pH 7.2 and solids content 34% calculated from the total weight of the sample.
Sample 3: Pigment suspension was mixed. Binder and suberin dispersions were mixed together. Homogenous binder/Suberin suspension was added to pigment suspension by mixing. Ratio of pigment/binder/suberin was 57/38/5, pH 6.8, solids content 35% calculated from the total weight of the sample.
Samples 1 - 3 were rod coated on FBB1 (standard K bar close wound, rod 0 (wire diameter: ins 0.002, mm 0.05) at room temperature and dried with infrared drier (50 s). Coating amount was 10 gsm.
Sample 4: Surface of FBB1 was prepared as for sample 1. Suberin dispersion (solid content 10 - 15% calculated from the total weight of the dispersion) was rod coated on the surface of sample 1. Coating amount of suberin was 4 - 5 gsm.
Cobb 300s was measured for all samples (Table 4). Suberin dispersion either as a part of coating colour or as a top coating as such improved Cobb values. Total surface energies of the coated surfaces (samples 1 - 4) were 58 - 67 mN/m, having polar component 24-35 mN/m. For FBB 1, total surface energy was 44 mN/m and polar component 16 mN/m.

**Table 4.**

| **Sample** | **Cobb300 (g/m²)** | |
|---|---|---|
| | average | standard deviation |
| FBB1 | 16 | 1 |
| Sample 1 | 7 | 1 |
| Sample 2 | 6 | 1 |
| Sample 3 | 2 | 3 |
| Sample 4 | 3 | 2 |

Grease resistance was measured with the same method as in Example 1. Grease resistance was improved from 6 - 24 h of FBB1 to 79 - 95 h in sample 1. Addition of suberin (samples 2-4) did not significantly affect the grease resistance.

WVTR was measured with the same method as in Example 1. Suberin dispersion as a part of coating colour improved water vapour resistance (Table 5). The effect was more prominent when suberin was applied as a top coating as such (sample 4).

**Table 5.**

| **Sample** | **WVTR** | | **WVTR** | |
|---|---|---|---|---|
| | **23 °C, 50% RH (g/m²/24h)** | | **38 °C, 90% RH (g/m²/24h)** | |
| | average | standard deviation | average | standard deviation |
| FBB1 | 56 | 2 | 1110 | 9 |
| Sample 1 | 46 | 2 | 930 | 44 |
| Sample 2 | 45 | 8 | 770 | 20 |
| Sample 3 | 32 | 0 | 720 | 116 |
| Sample 4 | 39 | 3 | 680 | 13 |

### Example 4 - Thickness of the coating layer

Folding boxboard with a compact precoating on the surface (FBB1) and folding boxboard with the same precoating and a top coating of barrier pigment/binder coating (FBB2) were coated with different amounts of suberin. Water vapour transmission rate was measured as disclosed in Example 1. The results are shown in Table 6.

**Table 6.**

| **Coated surface** | **Coating amount, (g/m²)** | **WVTR, 38°C, RH 90%; g/m2/24h** |
|---|---|---|
| FBB1 | 3 | 390 |
| FBB1 | 9 | 280 |
| FBB1 | 4 | 340 |
| FBB1 | 12 | 260 |
| FBB1 | 4 | 380 |
| FBB1 | 8 | 340 |
| FBB2 | approximately 2 | 460 |
| FBB2 | 5 | 420 |
| FBB2 | 6 | 450 |
| FBB2 | 6 | 460 |

These results show that even a thin layer of suberin provides good water vapour transmission rates.

Unless otherwise stated herein or clear from the context, any percentages referred to herein are expressed as percent by weight based on a total weight of the respective composition.

Unless otherwise stated, properties that have been experimentally measured or determined herein have been measured or determined at room temperature and at relative humidity (RH) of 50% unless otherwise indicated. Unless otherwise indicated, room temperature is 23 °C.

As used herein, the term "about" refers to the actual given value, and also to an approximation to such given value that would reasonably be inferred to one of ordinary skill in the art, including approximations due to the experimental and/or measurement conditions for such given value.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

## Claims

1. A fibrous product comprising a barrier-coating layer, wherein the barrier-coating layer comprises a wood-bark derived component, and the fiber content, particularly cellulosic fiber content, of the barrier-coating layer is less than 40% of the dry weight of the layer.

2. The fibrous product according to claim 1 wherein the wood-bark derived component is selected from suberin, betulin or combinations thereof.

3. The fibrous product according to claim 1 or 2 wherein the barrier-coating layer comprises the wood-bark derived component in an amount of at least 5%, such as at least 10%, of dry weight of the barrier-coating layer.

4. The fibrous product according to any of the preceding claims wherein the fibrous product comprises a fibrous substrate, which is paper, paperboard such as folding boxboard, food service board, linerboard or corrugated boards, a wood-based board or a moulded pulp product, and said barrier coating layer lies on top of the fibrous substrate.

5. The fibrous product according to any of the preceding claims wherein the fibrous product comprises at least one further coating layer.

6. The fibrous product according to any of the preceding claims wherein the amount of the barrier-coating layer is below 10 g/m², such as below 8 g/m² or below 6 g/m².

7. The fibrous product according to any of the preceding claims wherein the barrier-coating layer further comprises at least one pigment such as talc, calcium carbonate, clay, bentonite, montmorillonite or chemically modified pigments, and/or at least one binder, such as cellulose and cellulose derivatives, starch and starch derivatives, hemicellulose and hemicellulose derivatives and/or synthetic binders such as styrene-acrylate, styrene-butadiene, acrylate copolymers, ethyl acrylate, polyolefins, polyvinylacetate and polyvinylalcohol.

8. A method of coating a fibrous substrate, comprising the steps of:
- providing a barrier-coating composition comprising a wood-bark derived component, and
- applying the composition onto a surface of a fibrous substrate, to obtain a barrier-coated fibrous substrate,
wherein the fiber content, particularly cellulosic fiber content, of the composition is less than 40% of the dry weight of the composition.

9. The method according to claim 8, wherein the wood-bark derived component comprises suberin, betulin or combinations thereof.

10. The method according to claim 8 or 9, wherein the fibrous substrate is paper, paperboard, such as folding boxboard, food service board, linerboard or corrugated boards, a wood-based board or a moulded pulp product.

11. The method according to any of claims 8 - 10, wherein the barrier-coating composition comprises at least 5%, such as at least 10%, of the wood-bark derived component calculated from the dry weight of the composition.

12. The method according to any of claims 8 - 11, wherein the barrier-coating composition is applied onto the surface by spraying, rod coating, curtain coating, flexo printing, offset printing, surface sizing, foam coating or blade coating.

13. The method according to any of claims 8 - 12, further comprising applying at least one further coating layer on the fibrous substrate, either before or after applying the barrier-coating composition.

14. The method according to any of claims 8 - 13, comprising heating the obtained barrier-coated substrate to at least 50 °C, such as at least 80 °C, after the application step.

15. Use of the fibrous product according to any of claims 1 - 7 as or in packaging material.
